# EUROPEAN PATENT APPLICATION

(11) **EP 1 924 054 A1**
(43) Date of publication of application: **21.05.2008**
(21) Application number: 06291796.8
(22) Date of filing: 17.11.2006
(51) Int. Cl.: H04L 29/08

(54) **Telecommunication system and method**

(71) Applicant: France Télécom, 75015 Paris (FR)
(72) Inventor: Jain, Menuka, Edgware, Middlesex HA8 6PF (GB)
(74) Representative: DeVile, Jonathan Mark

(57) **Abstract**

A system for providing services to users includes an application server operable to provide a service to a group of the user equipment and a subscriber server operable to store subscriber information associated with each of the user equipment. The subscriber server is arranged to store an indication of whether the service provided by the application program is active or not and the group of user equipment to which the service is to subscribe. The application server is operable to communicate a group subscribe message to the service for activating the service provided by the application program. The subscriber server is responsive to an indication that the service for the group of users is active to confirm with the application server that each of the user equipment in the group is to receive the service in dependence upon whether the user equipment in the group has registered with the subscriber server. Accordingly, a system is provided in which the registration, re-registration and de-registration is decoupled from the deployment of a service to a group of users.

## Description

### Field of Invention

The present invention relates to telecommunications systems operable to deploy services to a group of user equipment terminals. The present invention also relates to methods of providing services to user equipment. In one example the system is an internet protocol multimedia system.

### Background of the Invention

Telecommunications systems, which provide a facility for communicating between user equipment terminal, can include sub-systems which are arranged to deploy services to the user equipment terminals. For example, Internet protocol multimedia systems provide a facility for deploying multimedia communications services to communications terminals which are engaged in multimedia communications sessions. In one example, the internet protocol multimedia sub-system (IMS) as specified in the 3GPP telecommunications standard TS 23.228V7.4.0 (2006-06) provides a specification of an internet protocol multimedia sub-system which utilises internet protocol communications to provide multimedia services to user equipment.

In known internet protocol multimedia systems such as that defined by the 3GPP a User Equipment (UE) registers with a Serving Call State Control Function (S-CSCF) to receive multimedia services from the internet protocol multimedia system. As a result of registration, a service profile of user is downloaded from a Home Subscriber Server (HSS) to the S-CSCF. The service profile of the user defines a set of application servers (AS), which are relevant to the UE and a set of Initial Filter Criteria (IFC) for that UE. The S-CSCF then performs, what is known as a third-party registration of the UE with all other Application Servers (AS), which appear in the service profile of the registered UE. One objective of third-party registration is to advertise to the application servers (AS) a public user identity, the S-CSCF address which is serving the registered UE and a registration expiration time for the UE. In addition to advertising to the application servers, third party registration creates a Session Initiation Protocol (SIP) signalling binding between S-CSCF with the application servers for the UE.

After registration, an application server can be arranged to be notified of a more detailed registration status of the registered UE. To do so, the UE has to subscribe for a registration event package. For such a subscription, the application server sends a Session Initiation Protocol (SIP) SUBSCRIBE message to the S-CSCF serving the registered UE. However, SIP signalling procedures require that third party registration has occurred before an application server can SUBSCRIBE for a registration event package. Subscription to a registration event package enables the applications to discover all the implicitly registered public user identities of the UEs. The application servers can obtain current capabilities of the UE as well as a notification of refresh registrations and de-registrations.

It would be desirable in an internet protocol multimedia system to reduce an amount of signalling traffic caused by registration and de-registration by user equipment.

### Summary of the Invention

According to the present invention there is provided a system, which is arranged to deploy communications services to user equipment. The system comprising a subscriber server, an application server and one or more control function servers. For the example application of an internet protocol multi-media system, the subscriber server maybe a home subscriber server, and the control function server maybe a call state control function. The subscriber server is operable to store subscriber information associated with each of the user equipment, the subscriber information including control conditions for loading into one or more control function servers for providing services to the user. The application server is operable to provide a service to a group of the user equipment in accordance with an application program. The subscriber server is arranged to store an indication of whether the service provided by the application program for the group of the user equipment is active or not and an indication of the group of user equipment to which the service is to be provided. The application server is operable to communicate a group subscribe message to one of the control function servers for activating the service provided by the application program for the group of the user equipment. The control function server, which receives the group subscribe message is operable to communicate to the subscriber server an indication that the service provided by the application program is active. The subscriber server is responsive to the indication that the service for the group of user equipment is active, to store an indication for communication to the one or more control function servers that each of the user equipment in the group is to receive the service in dependence upon whether each of the user equipment in the group has registered with the subscriber server.

Embodiments of the present invention provide a system in which the registration, re-registration and de-registration is de-coupled from the deployment of a service to a group of users. Conventionally, for a service to be deployed to a group of users, then a subscribe/notify message exchange must take place between a serving control function and the application server providing the service for each user equipment in the group of user equipment, for each service being deployed and for every change in the registration state of the user equipment. By arranging for a group subscribe message to signify a deployment of a service to a group of user equipment, which is sent from the application server to a control function server, and arranging for the control function server to record the deployment of the service in the subscriber server for the group of user equipment, an amount of signalling traffic which is required to deploy the service can be reduced. This is because only a single group subscribe message needs be sent from the application server to the control function server to deploy the service to the group of users. Since the activation of the service is recorded in the subscriber server, and the subscriber server is arranged to inform each of the control functions servers serving members of the group of user equipment, that the service has been activated, there is a reduced amount of signalling traffic between the control function and the application server. The reduction in signalling traffic results from the subscriber server informing the application server of the deployment of the service, once the user equipment is registered as being active or removal of the service if the user equipment are registered as being inactive or re-register as being active. Conventionally, each registration and re-registration would require a subscriber/notify message exchange between the control function and the application server for each user.

In some examples a plurality of control functions/servers may be provided in the system. For example, when a user equipment is registered as being active, the subscriber server may allocate the user to one of the control functions/servers, which serves the user equipment for providing a service to the user. According some examples, one of the control functions/servers may be assigned as a default control function server. The application server is operable to communicate a group subscriber message to the default control function server and the default control function server is operable to communicate an indication that the service for the group of user equipment is active to the subscriber server. The subscriber server is operable in response to the indication that the service to the group of user equipment is active to determine for each of the user equipment in the group whether the user equipment has registered as being active. If the user is registered as being active, the subscriber server is operable to identify for each of the active user equipment in the group, which of the one or more control functions/servers is serving the user equipment. The subscriber server is operable to confirm with the default control function server or the other control function server identified as serving the user that the service has been activated for that user equipment, the default control function or the other control functions/servers being operable to confirm with the application server that the service has been activated for the user equipment. Thus the subscriber server identifies which of the default or the plurality of other the control functions is responsible for the user and arranges for that control functions to confirm that the service has been activated for the user concerned. In one example, the confirmation is provided by the control function sending a notify message to the application server, the notify message representing an indication that service has been activated for the user.

One advantage provided by a system in accordance with the present invention is that a third party registration is no longer required for a user to be provided with a service from an application server. Although embodiments of the present invention find application with a telecommunications system providing services to user equipment using an application server, as indicated above, in some example the system is an internet protocol multimedia system, such as, for example, one operating in accordance with a standard or standards being developed by the 3GPP.

Various further aspects and features of the present invention are defined in the appended claims.

### Brief Description of the Drawings

Embodiments of the present invention will now be described with reference to the accompanying drawings where like parts are identified with the same alphanumeric reference numerals and in which:
Figure 1 is a schematic block diagram of a telecommunications system including an Internet Protocol Multimedia System (IMS) illustrating a conventional operation of a third party registration and subscription to a registration event;
Figure 2 is a schematic block diagram of a telecommunications system including an Internet Protocol Multimedia System (IMS) operating in accordance with an example embodiment of the present invention;
Figure 3 is a schematic block diagram of the telecommunications system shown in Figure 2 illustrating an operation in which a request for subscription is made when some of the users are registered;
Figure 4 is a schematic block diagram of the telecommunications system shown in Figure 2 illustrating an operation in which an application server makes a request for deletion of a subscription for a reg-event;
Figure 5 is a schematic block diagram of the telecommunications system shown in Figure 2 illustrating an operation in which a time out of a subscription from the application server occurs;
Figure 6 is a schematic block diagram of a telecommunications system including an Internet Protocol Multimedia System (IMS) illustrating a conventional operation of a third party registration;
Figure 7 is a schematic block diagram of a telecommunications system including an Internet Protocol Multimedia System (IMS) illustrating a conventional operation in which an application server subscribes for a reg event;
Figure 8 is a schematic block diagram of a telecommunications system including an Internet Protocol Multimedia System (IMS) operating in accordance with an example embodiment illustrating an operation of a subscription by an application server to a reg-event; and
Figure 9 is a schematic block diagram of the telecommunications system of Figure 7 illustrating a conventional operation in which notification is send to application server on termination of subscription; and
Figure 10 is a schematic block diagram of the telecommunications system of Figure 8 operating in accordance with an example embodiment illustrating an operation in which subscription is terminated.

### Description of Example Embodiments

### Conventional IMS Third Party Registration

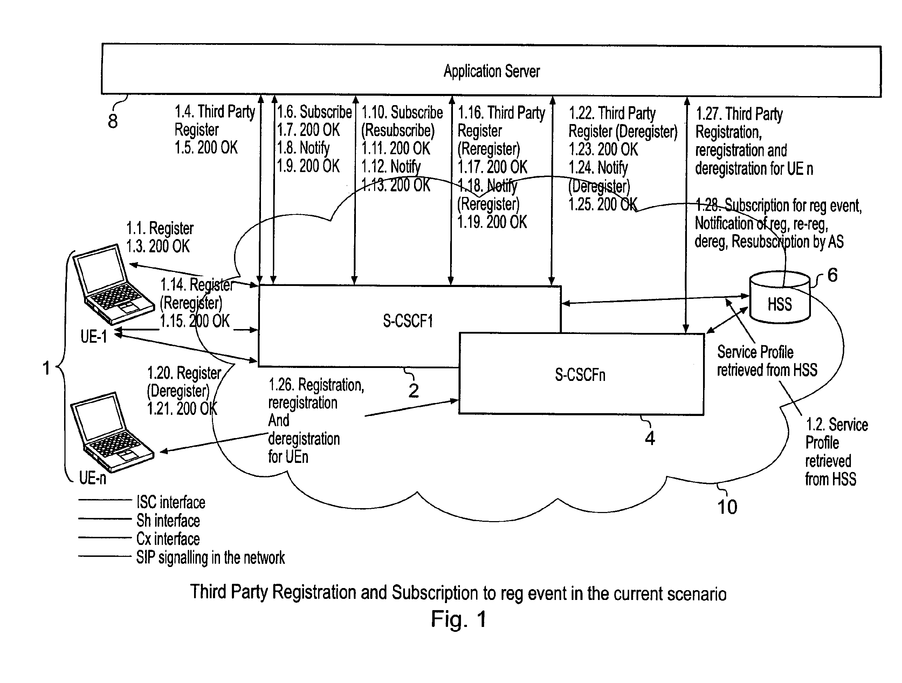

Figure 1 provides an example illustration of an internet protocol multimedia system (IMS), which operates in accordance with a conventional arrangement to deploy multimedia services to mobile user equipment (UE) UE-1, UE-n. Each of the UEs 1 have a serving call state control function (S-CSCF) S-CSCF-1, S-CSCF-n, 2, 4, each of which is provided with an Sh interface to a home subscriber server (HSS) 6. Also connected to the S-CSCF-1, S-CSCF-n, 2, 4, via an ISC interface is an application server 8. As will be appreciated communication between the UEs 1, the S-CSCF-1, S-CSCF-n, 2, 4, the HSS 6 and the application server 8 is via internet protocol packets, which are communicating signalling messages to these parts of the IMS as represented by a cloud 10.

In accordance with a conventional operation, when a UE becomes active, it registers for the deployment of services provided by the IMS. To this end, the UE registers with the S-CSCF which has been assigned to the UE. The UE sends a Session Initiation Protocol (SIP) registration message to the S-CSCF which has been assigned to that UE. For example, as shown in Figure 1, UE 1 sends a register message to the S-CSCF 2 which responds with a 200 OK message. The S-CSCF 2 then downloads the user profile data from the HSS 6 which contains initial filter criteria for deployment of services to the UE 1. The initial filter criteria might include conditions also known as triggers which when met serve as an indication that a service or action is to be deployed to the UE 1.

Figure 1 also illustrates a series of messages which would be communicated between the application server 8 and the S-CSCF 2 and the HSS 6, which are required for the application server 8 to perform a third party registration to receive a registration event package of the UE 1. The message flow of the third party registration is summarised as follows:
1.1. The UE sends a registered message to the S-CSCF2.
1.2. The S-CSCF1 2 retrieves the service profile from the HSS 6.
1.3. The S-CSCF1 2 responds to the UE1 with a 200 OK message.
1.4. The S-CSCF1 2 performs a third party registration of the UE on behalf of the UE with the application server 8, as a result of the initial filter criteria downloaded by the HSS 6 indicating that the UE1 has subscribed to a service provided by the applications server 8.
1.5. The application server 8 responds with a 200 OK message.
1.6. The application server 8 then sends a SIP SUBSCRIBE message to the S-CSCF-1 2 to subscribe to a registration event package, to be informed of a detailed registration status of the UE1 in order to provide the service to the UE1.
1.7. The S-CSCF-1 2 responds with a 200 OK message.
1.8. Once the service provided by the application server has become active, the S-CSCF1 2 sends a NOTIFY message to the application server 8 indicating that the subscription is active.
1.9. The Application Server 8 responds with a 200 OK message.
1.10. If the subscription is going to elapse, the application server 8 sends a SIP SUBSCRIBE message to the S-CSCF-1 2 to re-subscribe to the registration event package, to continue with the subscription.
1.11. The S-CSCF-1 2 responds with a 200 OK message.
1.12. As a result of the subscription the S-CSCF1 2sends a NOTIFY message to the application server 8 confirming that the service is active.
1.13. The application server 8 responds with a 200 OK message.
1.14. The UE1 may be required to re-register with the S-CSCF1 2, if for any reason the UE1's registration is going to elapse soon.
1.15. The S-CSCF1 2 responds to the re-registration by the UE1 with a 200 OK message.
1.16. The S-CSCF1 2 performs a third party registration of the UE on behalf of the UE to re-register the UE1 with the application server 8.
1.17. The application server 8 responds with a 200 OK message.
1.18. The S-CSCF1 2 sends a NOTIFY message to the application server 8 indicating that the service provided to the application server 8 is active.
1.19. The application server responds with a 200 OK message.
1.20. The UE1 may send a de-registration message to the S-CSCF1 2 to de-register the UE1 from receiving services from the IMS.
1.21. The S-CSCF1 2 then sends a 200 OK message to the UE1, to confirm to the UE1 that it has received the de-register message.
1.22. The S-CSCF1 2 acting as a third party de-registers the UE1 with the application server 8.
1.23. The application server 8 responds with a 200 OK message.
1.24. The S-CSCF1 2sends a NOTIFY message to the application server 8 indicating that the service provided to the application server 8 has been deactivated.
1.25. The application server 8 responds with a 200 OK message.
1.26. Similarly, for UEn which is assigned the S-CSCFn 4 as the serving S-CSCF, registration and re-registration messages are sent by the UEn to the S-CSCFn 4 for the UEn to register, re-register and de-register the UEn for services from the IMS.
1.27. For the UEn, the S-CSCFn 4 performs a third party registration, re-registration and de-registration of the UEn for the service provided by the application server 8.
1.28. The application server 8 then subscribes, re-subscribes and de-subcribes to the S-CSCFn 4 for a reg event package of the status of UEn, in order to provide the service to the UEn. S-CSCFn4 also sends a NOTIFY message to indicate that the service for the UEn has been activated.

Thus, for the conventional arrangement shown in Figure 1 in order for an application server to subscribe for a registration ("reg") event package, not only does the serving S-CSCF of a particular UE need to be known but also for every registration, de-registration and re-registration a message exchange must take place between the application server and the S-CSCF.

In accordance with the present technique, an application server is arranged to generate SIP requests and dialogs on behalf of users, which are sent to the S-CSCF serving the user. However, to register for a registration event package the application server needs to be aware of the S-CSCF address serving a particular user.

Many signaling messages are required to be generated and exchanged, to establish and maintain a third party registration of a UE with an application server. Furthermore, this exchange of signaling messages is required for all users which may potentially receive a service from the same application server. Furthermore, registration is duplicated if there is more than one application server applicable to a registered UE. Also a SIP SUBSCRIBE message for a registration event package per user requires a substantial quantity of signaling messages to be exchanged between an application server and S-CSCF for a user, which increases proportionally as an application server handles more users. This results in a substantial amount of signaling for retrieving registration information of a user.

### Example IMS Operating in accordance with the Present Technique

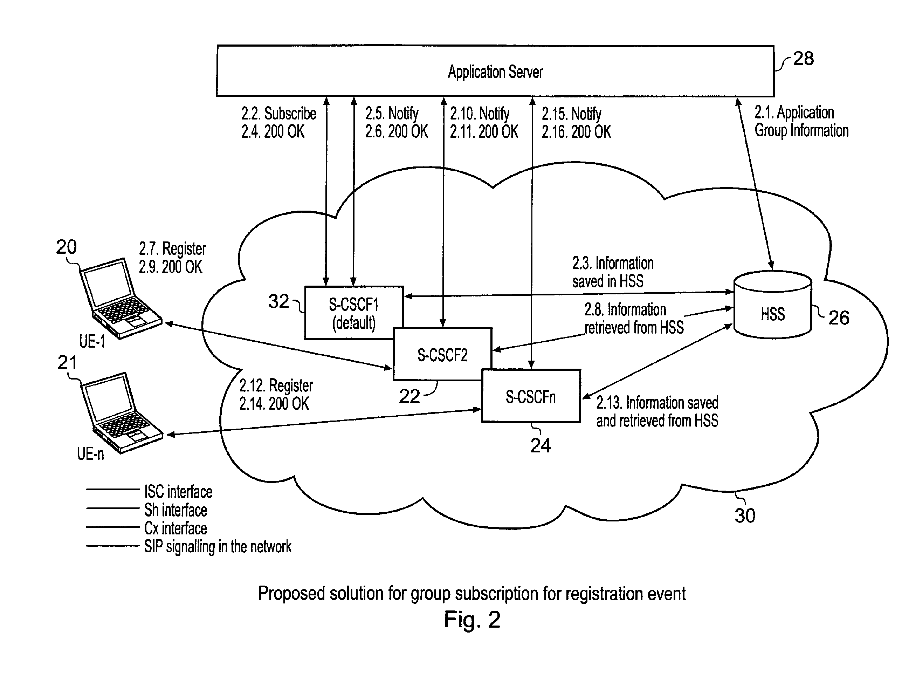

Figure 2 provides an example internet protocol multimedia system (IMS) which operates in accordance with the present technique to reduce signaling flow between an S-CSCF and an application server for third party registration and reg-event package subscription per user. If signaling is decreased, there is reduced processing required at the S-CSCF and the application server. Furthermore, with decreased signaling there is an improvement in the efficiency of the utilisation of network bandwidth.

In Figure 2 a plurality of user equipment UE-1 20, UE-n 21 form part of a group of UEs which are to subscribe to the same service provided by an application server 28. As with the example shown in Figure 1 each UE-120, UE-n 21 has a serving call state control function S-CSCF 2, S-CSCFn 22, 24 which serve to deploy services to UE-1, UE-n 20, 21, respectively. In correspondence with the parts shown in Figure 1, the IMS shown in Figure 2 includes a home subscriber server (HSS) 26 and the application server 28, which are connected via the communication of internet protocol packets as represented by a cloud 30.

In accordance with the present technique, a single subscription for a group of users can be performed by the application server 28 with S-CSCF rather than multiple individual subscriptions for reg-event package. This subscription is independent of registration status of any user included in the group. In on example, the group is identified by a URI, which is created by the application server 28 and stored in HSS 26 via the Sh interface. The application server 28 defines the members of this group and this information is stored in HSS 26.

Since different the UEs belonging to the group of users can be assigned to different S-CSCF, there is no relation between the group of users and a particular S-CSCF. However, for creating a SUBSCRIBE context one S-CSCF (designated as "default" S-CSCF) out of a set of possible S-CSCF in the home network is arranged to receive the SUBSCRIBE for the group of users. All application servers have the details of this "default" S-CSCF, which provides a URI, indicating to whom they can send the group subscription message.

Thus after successful configuration of a group of users represented by a URI, the application server can send a SUBSCRIBE message representing subscription request for all users using the subscription application URI as a request URI and "To" header. It is irrelevant as to whether the users belonging to the group are themselves registered or not at the time of the SUBSCRIBE message. The default S-CSCF is arranged to save the subscription information of the SUBSCRIBE dialog in the HSS 26 for use by all the S-CSCF. All the S-CSCF use this information for sending NOTIFY messages for users belonging to the group, and for the other users they are assigned. Hence, the HSS 26 becomes a repository for subscription state information.

It is also proposed that the S-CSCF shall not use a third party registration if the S-CSCF are arranged in accordance with the present technique. As soon as a UE is registered to an S-CSCF, the S-CSCF retrieves the subscription information stored in the HSS 26 along with the user profile and communicates with the application server 28 using a NOTIFY message. Thus instead of sending a REGISTER message, the S-CSCF sends a NOTIFY message to transport all parameters, which the S-CSCF used to send via message body in the REGISTER message.Detailed Notification may also be send depending on the subscription requested by the application server. Subsequent to a first NOTIFY message to the S-CSCF, the S-CSCF assumes that a group subscription is for a reg-event package and generates a NOTIFY message as it would have normally done with a SUBSCRIBE message after a third party register has been performed. A partial NOTIFY may be sent by all the S-CSCF to further save the network bandwidth.

To renew or delete a subscription to a reg-event package, an application server 28 sends a SUBSCRIBE message to the default S-CSCF. The default S-CSCF would be responsible for maintaining a subscription timer, which provides a duration for which the subscription of a particular service remains active. However, if a request is to delete or renew subscription, the default S-CSCF updates the subscription information stored in the HSS 26. In case of renewing subscription, the default S-CSCF updates the subscription timer. In case of deletion of subscription, the S-CSCF triggers the HSS 26 to inform all other S-CSCFs associated with the group of users that the subscription has been deleted so that they can delete their state machine related to this subscription. In addition, the HSS 26 informs the application server 28 through the Sh interface of the deletion of subscription. This further reduces the messages which otherwise would have been send in conventional case.

In the event there is a timeout from the application server 28 for receiving a NOTIFY message generated by any of the S-CSCFs, the S-CSCF which detected the timeout informs the HSS 26 about the deletion of a subscription. This again triggers the HSS 26 to inform all other S-CSCF and the default S-CSCF to delete the subscription. A similar approach would be adopted if an S-CSCF receives an error message for a NOTIFY message. Furthermore, a message is sent from the HSS 26 to the application server 26, via the Sh interface, which informs the application server 28 that subscription has been deleted.

An example message flow of the IMS operating in accordance with the present technique is set out as follows:

2.1. An application server (application server for service1) can send subscription application URI i.e. (service1subscription@home.network.net) to the HSS for all users using service 1. It also retrieves the default S-CSCF (i.e. S-CSCF1) using Sh interface.

2.2. The application server for a "service1" can subscribe to a registration event "reg" for all its users, which are handled by an IMS. This is done by sending subscribe message with *"To header"* and "Request URI" set to service1subscription@home.network.net. The application server would send the subscription message to default S-CSCF i.e. S-CSCF1. A sample subscribe message is as shown below:

| |
|---|
| **SUBSCRIBE** service 1 subscription@home.network.net |
| **Via** as@home.network1.net; |
| **From** <sip:as@home.network.net> |
| **To** service1subscription@home.network.net |
| **Route** scscfl.francetelecom-ims.net |
| **Contact** <as@home.networkl.net> |
| **Call-ID** 12345 |

2.3. The S-CSCF1 32 on receiving subscription for a group of users stores the relevant information from the subscribe message in the HSS which is associated with subscription application URI. S-CSCF1 would be responsible for maintaining subscription timer.

2.4. S-CSCF1 responds back with 200 OK message for the subscribe message to acknowledge the subscription.

2.5. The NOTIFY message is also sent indicating that the subscription is active. A sample Notify message is shown below

| |
|---|
| **NOTIFY** service1subscription@home.network.net |
| **Via** scscf1.home.network1.net; |
| **From** <sip: as@home. network. net> |
| **To** service 1subscription@home.network.net |
| **Route** <sip :as@home.network.net> |
| **Contact** <sip:scscfl.home.network1.net> |
| **Call-ID** 12345 |

2.6. The message "200 OK" is returned back to the S-CSCF1.

2.7. The UE-1 20 on being switched on, sends a register message, which is received by S-CSCF2 22, which is it's assigned S-CSCF. Here, for simplicity a proxy call state control function (P-CSCF) and Intermediate call state control function (I-CSCF) are not shown and it is assumed that normal registration process via P-CSCF and I-CSCF are taking place.

2.8. The S-CSCF2 22 authenticates the user by retrieving information from the HSS 26. The S-CSCF2 22 also checks whether the user is associated with any subscription in order to send NOTIFY messages to the application server 28. Here in this example, the S-CSCF2 22 determines that service 1 subscription is there for this user (UE-1) and hence retrieves the subscription dialog information from the HSS 26 in order to send a NOTIFY message.

2.9. Assuming that user UE-1 is authenticated, the S-CSCF2 22 sends back a 200 OK message and is received by the UE -1.

2.10. A NOTIFY message is send indicating the subscription status of UE-1.

2.11. A "200 OK" message is send back to the S-CSCF2.

2.12. Similarly, UE-n 21 registers with the S-CSCFn 24.

2.13. The S-CSCFn 24 retrieves the information from HSS to authenticate the user UE-n. Furthermore, S-CSCFn 24 queries the HSS 26 to determine whether any subscription profile associated with the user (UE-n) exists. Here in this example, the S-CSCF2 determines that service2subscription is there for user (UE-n) and like in step-8 retrieves the subscription information in order to send notify message. A sample notify message is as shown below:

| |
|---|
| **Notify** userB@francetelecom-ims.net |
| **Via** scscfn.francetelecom-ims.net, [5555::aaa:bbb:ccc:ddd]:1357 ; |
| **From** <sip:as@home.network.net> |
| **To** service 1subscription@home.network.net |
| **Route** as@francetelecom-ims.net |
| **Contact** <sip: scscfl. francetelecom-ims. net> |
| **Call-ID** 12345 |

2.14. The S-CSCFn 24 authenticates the user UE-n 21 and sends back the message *"200 OK* "to the UE-n.

2.15. The S-CSCFn 24 after sending the 200 OK message, sends Notify message to the application server 28 indicating the registration status of the user (UE-n) and all the implicitly registered identities.

2.16. The application server 28 (serving service 1) sends back the message *"200 OK"* to the S-CSCFn 24.

In the message flow presented above, further notification of a particular user's re-registration or de-registration is sent to the application server 28 as for a usual notification for a registration event.

Further more detailed examples of the operation of the IMS in accordance with the present technique are illustrated below:

### Subscription Activation Request when some of users are already registered

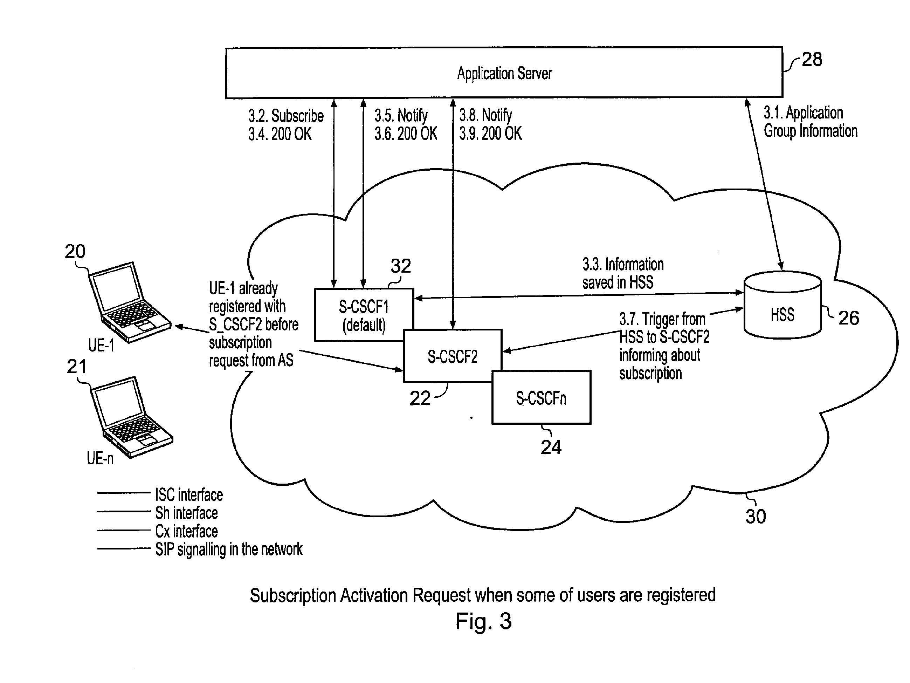

Figure 3 depicts a subscription activation request from the application server 28 to the default S-CSCF1 32 for a group of subscribers using the service of the application server 28. Here, when the application server 28 requests for subscription request from S-CSCF1 32 (default S-CSCF), the S-CSCF 32 saves the subscription information in HSS before acknowledging the subscription. A trigger is sent from the HSS 26 to all the S-CSCF 22, 24, which has registered users belonging to the subscription group. As seen in the Figure 3, the HSS 26 triggers a message to the S-CSCF2 22 informing the S-CSCF2 22 of the subscription of reg-event for UE-1 20. The S-CSCF2 22 sends a NOTIFY message to the application server 28 to indicate that the UE 1 20 has registered with the IMS. A subsequent NOTIFY message is sent from the S-CSCF2 22 to indicate the registration, re-registration and deregistration of the UE 1 20.

### Subscription Deletion due to deletion request from application server

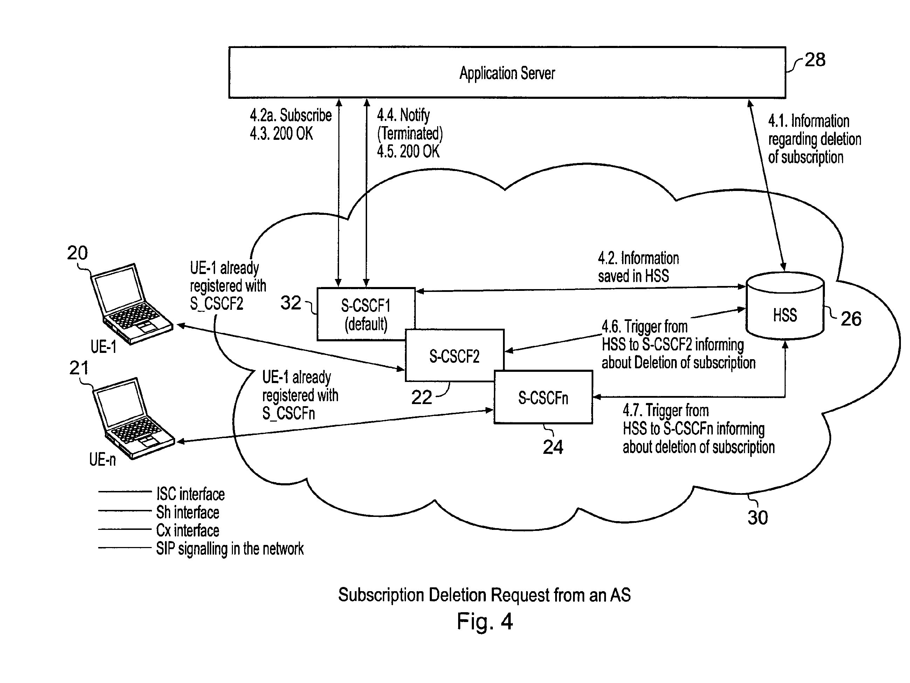

Figure 4 depicts a scenario where an application server is already subscribed for reg-event for all its users. It is assumed that the S-CSCF2 22 and the S-CSCFn 24 are sending NOTIFY messages for the UE-1 20 and the UE-n 21 respectively to the application server 28. The application server 28 requests a subscription deletion by sending a SUBSCRIBE message with an Expiry header equal to zero. The S-CSCF1 32 (default S-CSCF) on receiving deletion request indicates to the HSS 26 that the subscription has been deleted as shown in the message numbered as shown in the step 4.2. In addition, the S-CSCF1 32 stops the subscription timer and sends a NOTIFY message 4.4 (with subscription state as terminated) to indicate termination of subscription. Furthermore, the HSS 26 informs all the S-CSCF 22, 24 (where the subscription was active) that subscription has been terminated as indicated in message 4.6 and 4.7.

### Subscription Deletion Due to Timeout

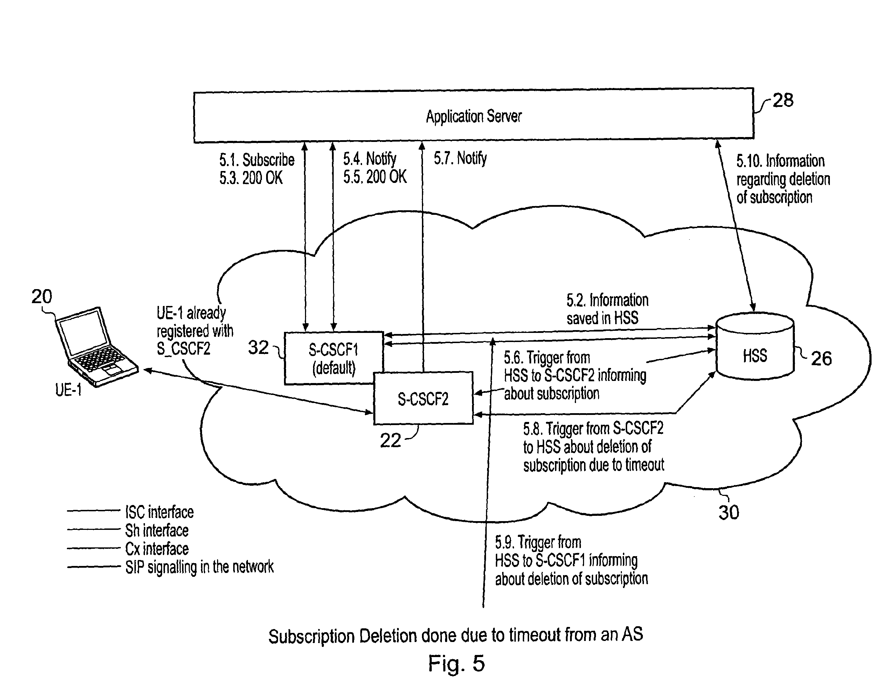

Figure 5 depicts a subscription deletion due to a timeout from an application server. As shown in the step 7, S-CSCF2 22 sends a NOTIFY message (5.7) and does NOT receive a response from an application server 28. As a result of a timeout event, the S-CSCF2 22 deletes a subscription state machine, which models the subscription state and informs the HSS 26 about the termination of the subscription as shown in message 5.8. The HSS 26 in turn informs S-CSCF1 32 (default S-CSCF) and any other S-CSCF 22, 24 where subscription is active. The S-CSCF1 32 terminates the subscription and the timer associated with the subscription.

### Summary of Advantages

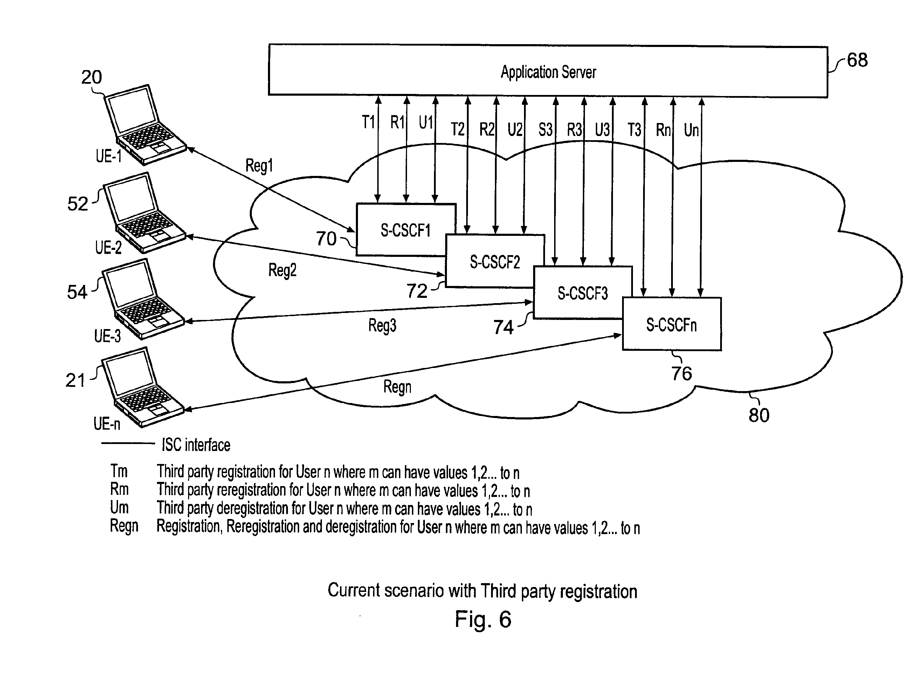

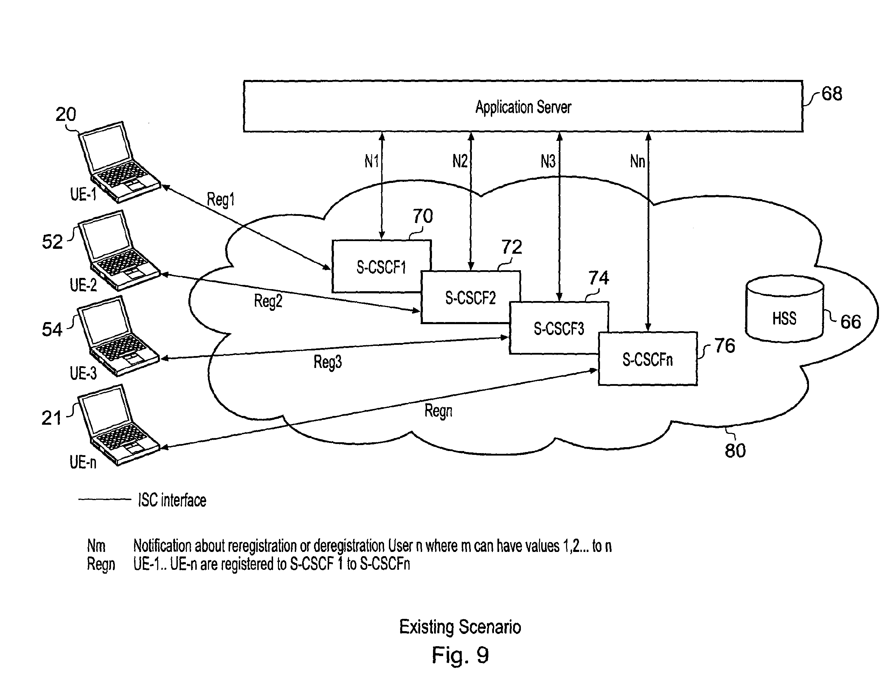

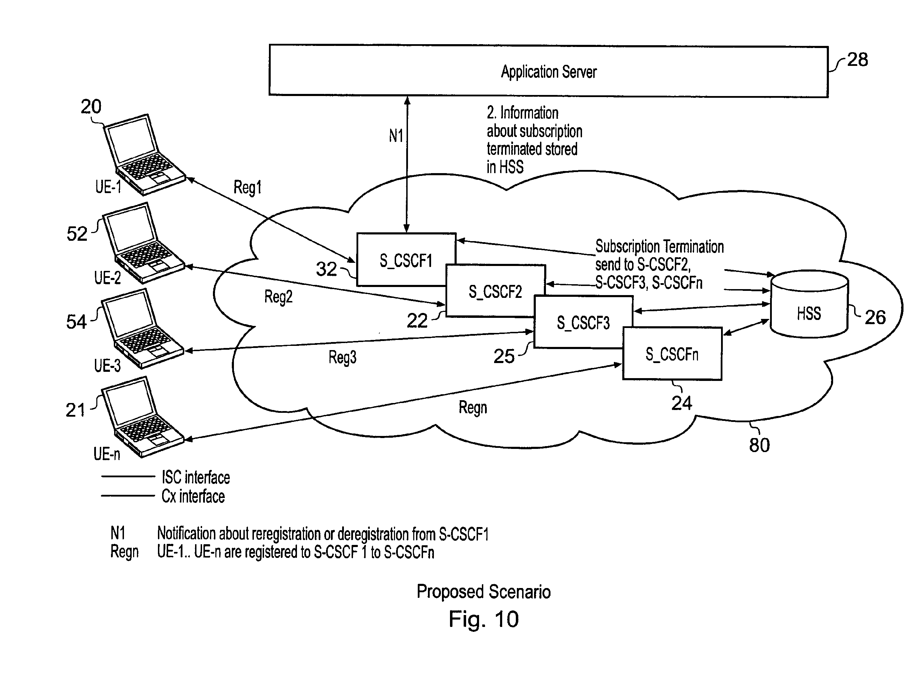

Embodiments of the present technique can provide the following advantages:
- Subscription can be sent anytime, as an S-CSCF address handling a particular user is not required. Hence, no third party registration is required for any user, reducing messages between S-CSCF and application server. Figure 6 provides an illustration of a conventional IMS communicating internet packets via an IP plane 80, performing a third party registration by S-CSCF1 70, S-CSCF2 72, S-CSCF3 74, S-CSCFn 76 for the user equipment 20, 21, 52, 54 with an application server 68, which is required for registration, re-registration and deregistration. However, with an IMS adapted in accordance with the present technique there is no third party registration required.
- In accordance with the present technique, if an application server does not provide a service where the application server can originate a dialog on behalf of UE, it need not store the S-CSCF address against the UE.
- A reduction in signaling messages can reduce a processing time at both the application server and the S-CSCF and also save the network bandwidth.
- Since a group subscription is sent rather than multiple individual subscription message, signaling messages between the application server and the S-CSCF for subscription to reg-event package are significantly reduced. This is advantageous for an application server providing service to a large number of users.

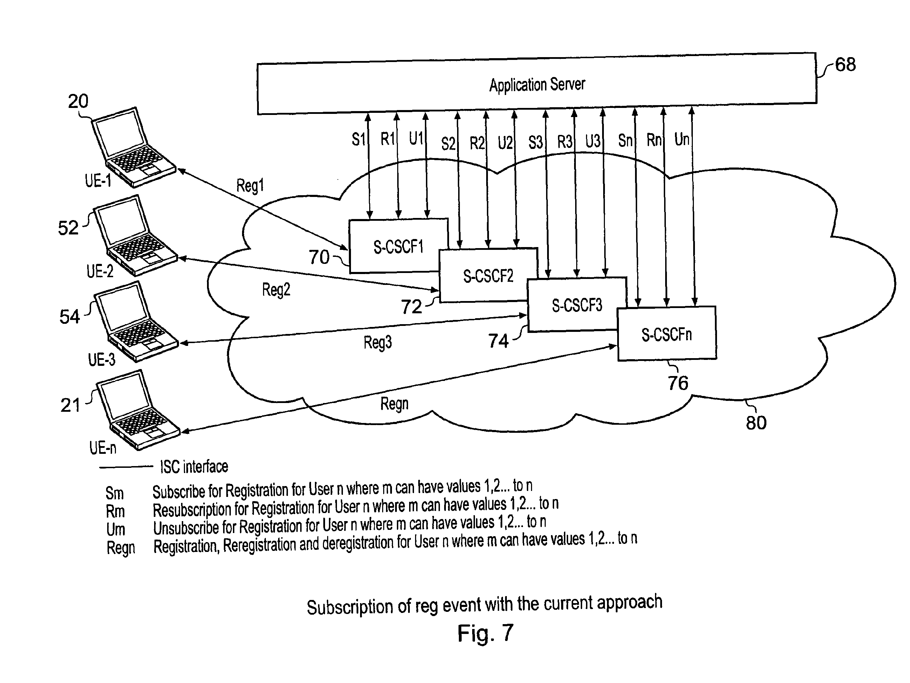

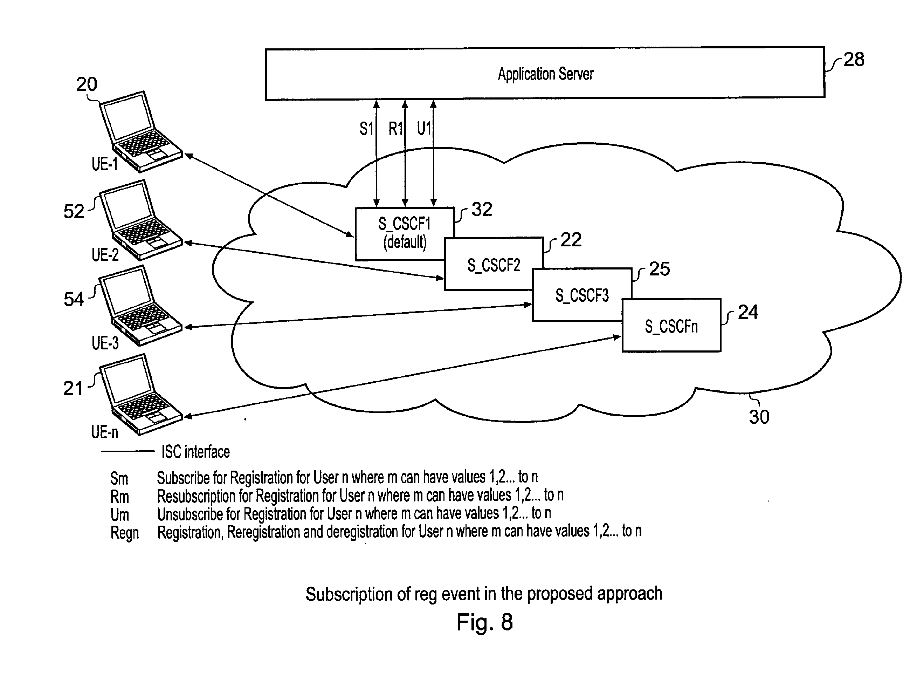

- Figure 7 illustrates the operation of an IMS in accordance with a conventional operation in which the application server 68 needs to subscribe, re subscribe and unsubscribe for all users (User 1, User 2 and User n) 20, 21, 52, 54. However, Figure 8 depicts an IMS operating in accordance with the present technique, which reduces the subscription messages. Here, the application server 28 needs to send only one subscribe, re-subscribe and unsubscribe message for n users (which may be million, thousands) rather than n subscribe, re-subscribe and unsubscribe messages.
- In accordance with the operation of a conventional IMS, if an application server serving a large number of users (User1, User 2, and User n) 20, 21, 52, 54 goes down, then notification is sent for each subscription from all the S-CSCF 's 70, 72, 74, 76 before terminating the subscription. This is illustrated in Figure 9. In contrast, with the present technique as illustrated in Figure 10 Notification messages are reduced which in turn further reduces the signaling. As shown in Figure 10, when S-CSCF1 32 serving the UE1 20 does not receive a response for the Notification message, it informs the HSS 26 of the subscription being terminated. The HSS 26 further informs all the S-CSCF serving other users (that belong to the same group) so that they terminate the subscription and no more notification messages are sent to the application server. Consequently, as can be seen by the representation provided by Figure 10 rather than sending n Notification messages only some notification messages are sent.

Various modifications may be made to the example embodiments without departing from the scope of the present invention. For example the present technique finds application with any internet protocol multimedia systems, which may operate in accordance with signaling protocol messages other than the session initiation protocol. Furthermore, this may be applicable to any system other than IMS.

## Claims

1. A system for providing communications services to user equipment, the system comprising
a subscriber server operable to store subscriber information associated with each of the user equipment, the subscriber information including control conditions for loading into one or more control function servers for providing services to the user,
an application server operable to provide a service to a group of the user equipment in accordance with an application program, wherein
the subscriber server is arranged to store an indication of whether the service provided by the application program for the group of the user equipment is active or not and an indication of the group of user equipment to which the service is to be provided,
the application server is operable to communicate a group subscribe message to one of the control function servers for activating the service provided by the application program for the group of the user equipment, and
the control function server, which received the group subscribe message is operable to communicate to the subscriber server an indication that the service provided by the application program is active, the subscriber server being responsive to the indication that the service for the group of user equipment is active, to store an indication for communication to the one or more control function servers that each of the user equipment in the group is to receive the service in dependence upon whether each of the user equipment in the group has registered with the subscriber server.

2. A system as claimed in Claim 1, including one or more other control function servers and the control function server which receives the group subscribe message is a default control function server for the application server, wherein the subscriber server is operable in response to the indication from the application server that the service to the group of user equipment is active
to determine, for each of the user equipment in the group, whether the user equipment is registered as being active, and if the user equipment registered as being active,
to identify, for each of the active user equipment in the group, which of the default control function server or other of the one or more control function servers is serving the active user equipment,
to confirm with the default control function server or the other control function server identified as serving each of the user equipment in the group that the service has been deployed for the user equipment requested by the application server, the default control function server or the other control functions server being operable to confirm that the service has been deployed for the user equipment with the application server.

3. A system as claimed in Claim 2, wherein, if the user equipment is not registered as being active, the subscriber server is arranged to store an indication that the service has been deployed for the group of user equipment in the subscriber information associated with the user equipment.

4. A system as claimed in Claim 2 or 3, wherein the default control function server or the other control function server identified as serving the user equipment confirm that the service is deployed for the user equipment by sending a message to the application server to confirm that the service has been deployed for the user equipment.

5. A system as claimed in Claim 4, wherein the default control function server or the other control function server identified as serving the user equipment sends detailed description information identifying the user equipment which the control function server is serving and the service deployed.

6. A system as claimed in any preceding Claim, wherein the group of user equipment is represented by the application server as a universal resources identifier.

7. A system as claimed in Claim 5, wherein the application server is operable to send a subscribe message representing a subscription request for all members of the group of users using the subscription application universal resources identifier as a request universal resources identifier.

8. A method of providing services to user equipment, the method comprising
storing subscriber information associated with each of the user equipment in a subscriber server, the subscriber information including control conditions for loading into one or more control function servers for providing services to the user,
providing a service for a group of the user equipment, using an application server operating in accordance with an application program,
storing, in the subscriber server, an indication of whether the service provided for the group of user equipment by the application server is active or not and an indication of the group of user equipment for which the service is to be provided,
communicating a group subscribe message to one of the control function server for activating the service provided by the application program for the group of the user equipment,
communicating to the subscriber server from the control function server, which received the group subscribe message an indication that the service provided by the application program is active, and
storing, in the subscriber server in response to the indication that the service for the group of user equipment is active, an indication for communication to the one or more control function servers of the group of user equipment, that each of the user equipment in the group is to receive the service in dependence upon whether each of the user equipment in the group has registered with the subscriber server.

9. A subscriber server for operation with the system as claimed in any of Claims 1 to 7, the subscriber server being operable
to store subscriber information associated with each of the user equipment, the subscriber information including control conditions for loading into one or more control functions servers for providing services to users,
to store an indication of whether a service provided for a group of user equipment by an application program is active or not and an indication of the group of user equipment to which the service is to be provided,
to receive from one of the one or more control function servers an indication that the service provided by the application program is active, and
in response to the indication that the service for the group of user equipment is active, to store an indication for communication to the one or more control function servers that each of the user equipment in the group is to receive the service in dependence upon whether each of the user equipment in the group has registered with the subscriber server.

10. An application server for operation with a system as claimed in any of Claims 1 to 7, the application server being operable
to provide a service to a group of user equipment in accordance with an application program,
to communicate to a subscriber server an indication of whether the service provided by the application program is active or not and an indication of the group of user equipment for which the service is to be provided, and
to communicate a group subscribe message to a control function server for activating the service provided by the application program for the group of the user equipment.

11. A telecommunications system including an internet protocol multimedia system operating according to any of claims 1 to 7, wherein the subscriber server is a home subscriber server, and the control function server is a call state control function.
